# EUROPEAN PATENT SPECIFICATION

(11) **EP 4 303 761 B1**
(45) Date of publication and mention of the grant of the patent: **13.08.2025**
(21) Application number: 22183707.3
(22) Date of filing: 07.07.2022
(51) Int. Cl.: G06K 19/077, B60C 19/00, H01Q 1/22

(54) **A CONTACTLESSLY ACTIVATED RFID TAG FOR A TIRE**
BERÜHRUNGSLOS AKTIVIERTES RFID-ETIKETT FÜR EINEN REIFEN
ÉTIQUETTE RFID À ACTIVATION SANS CONTACT POUR UN PNEU

(43) Date of publication of application: 10.01.2024
(73) Proprietor: Kordsa Teknik Tekstil Anonim Sirketi, 41310 Izmit/Kocaeli (TR); SES RFID Solutions GmbH, 40489 Düsseldorf (DE)
(72) Inventor: Taman, Onen Ezgi, 41310 Kocaeli (TR); Ilgun, Ahmet Burak, 41310 Kocaeli (TR); Kaya, Bahadir, 41310 Kocaeli (TR); Fidan, Mehmet Saadettin, 41310 Kocaeli (TR); Yilmaz, Mehmet Ilker, 41310 Kocaeli (TR); Cheng Lee, Yu, 40489 Düsseldorf (DE); Jung Chao, Ping, 40489 Duesseldorf (DE); Scattergood, Martin, 40489 Duesseldorf (DE)
(74) Representative: Dericioglu, E. Korhan

(56) References cited:
- EP-A1- 2 772 873
- CN-U- 216 871 230
- JP-A- 2020 026 593
- US-A1- 2005 132 790
- US-B2- 10 515 298
- US-B2- 11 152 684

## Description

### Technical Field of the Present Invention

The present invention relates to electrical devices for mounting onto tires. More specifically, the present invention relates to RFID tags for mounting onto tires and tires comprising such RFID tags.

### Background of the Present Invention

It is known that incorporating electrical devices into tire structures has many advantages, such as tracking the tire during manufacture, transport and storing operations, as well as measuring physical parameters, such as temperature and pressure. Different types of electrical devices are used in the art for these purposes, with radio frequency communication between the tire and an external monitoring or interrogating device being the most common. Such communication systems often include a radio-frequency identification (RFID) tag, and a reader that communicates with the RFID tag. The RFID tag includes an antenna and an RFID chip. Thus, information from the reader is received through the antenna and stored in an RFID chip, and the information stored in the RFID chip is transmitted to the reader through the antenna. RFID devices may be read-only, write-only, or read-and-write devices.

RFID tags and other electrical devices may be mounted to a tire in a tire mountable apparatus. One of the problems associated with RFID tags is how to position and configure the antenna such that the data in the device are accurately transmitted to the information gathering device outside of the tire. The issues related to the use of RFID tags in tires are: (i) positioning the antenna as close to the outside of the tire as possible so that transmission efficiency is improved, (ii) positioning the antenna away from the metal reinforcing cords that interfere with the signal propagation, (iii) providing a device that can withstand the cyclic stresses in the operating tire, (iv) mounting the device onto the tire without overhandling and damaging it, and (v) ensuring the adhesion between the antenna, typically a metallic element, to the rubber material to secure it in place.

Examples of RFID tags for tires found in the state of the art are given below.

US 7,102,499 discloses an electronic communication device for a tire having a radio device and an antenna intended to be attached to or embedded in a tire. The antenna is spirally or helically shaped to absorb tensile and bending stress applied by the tire. The antenna body may be a wire formed of spring steel, brass or zinc coated spring steel, or spring brass. A coating of insulating material coats the radio device and antenna for mounting on or in, and operation in, a tire structure.

US 8,462,077 and US 8,766,874 disclose an apparatus for providing an RFID device for integration into a tire. A printed circuit board (PCB) is provided with notches in opposed ends of the PCB that are provided with guide portions as a part of the notches that function as threads to guide an end portion of a matching single pitch helical antenna into appropriately placed vias on the PCB. Threading of the helical antenna is assisted by use of an assembly jig having antenna guiding channels and PCB retaining positioning elements and antennas are bonded by soldering to solder pads on the PCB.

US 9,490,531 discloses an antenna for an electronic device in a tire including a core for integrating into a rubber compound for a tire. The antenna further includes an electromagnetic-signal conduction layer, which is made of copper and coats the core, and a chemical isolation layer, which coats the conduction layer and is intended to chemically isolate the rubber compound from an object coated by the isolation layer.

US 11,152,684 discloses a radiofrequency communication module for integrating into the structure of a tire. Said module comprises a radiofrequency transponder embedded in an elastomer blend and comprising an electronic chip and a radiating antenna that is able to communicate with a radiofrequency reader. The radiofrequency transponder in addition comprises a primary antenna that is electrically connected to the electronic chip, the primary antenna is electromagnetically coupled to the radiating antenna, the radiating antenna consists of a single-strand helical spring, and the radiating antenna has a core made of steel coated with a conduction layer.

Further examples of RFID tags can be found in EP 2 772 873, JP 2020-26593, CN 216871230, and US 2005/132790.

The RFID tag must have long life during the entirety of the working life of the tire. In the prior art, the main technical problem lower durability due to soldered joint tag designs. In order to solve this problem, US 10,515,298 discloses an RFID transponder having a chip and an antenna connected to the for contactless communication, which also includes a plastic package which accommodates these transponder components as integrated components. The plastic package forms a coil core on its outer surface, on which a booster antenna having at least one coil winding is arranged. The RFID transponder can be exposed to high mechanical stress and has improved performance due to the connection of a booster antenna.

The present invention provides and improvement on the art by providing an antenna design for embedding electronic device during tire manufacturing to increase durability, fatigue performance and signal level. The electrical device of the invention is defined in claim 1.

The electrical device of the present invention reduces operational process for tire manufacturing of RFID tag embedded tire by providing a ready to use tag which can be embedded within the tire without requiring further coating or other processing. Further, the present invention eliminates the rubber patching/layering process during preparation of the electrical device.

### Brief Description of the Technical Drawings

Accompanying drawings are given solely for the purpose of exemplifying an electrical device, whose advantages over prior art were outlined above and will be explained in brief hereinafter.

The drawings are not meant to delimit the scope of protection as identified in the Claims, nor should they be referred to alone in an effort to interpret the scope identified in said Claims without recourse to the technical disclosure in the description of the present invention.
Figure 1 demonstrates a schematic closed (A) and exploded (B) view of an electrical device with an antenna according to the present invention.
Figure 2 demonstrates a sectional view of a tire showing alternative placements for an electrical device with an antenna according to the present invention.

### Detailed Description of the Present Invention

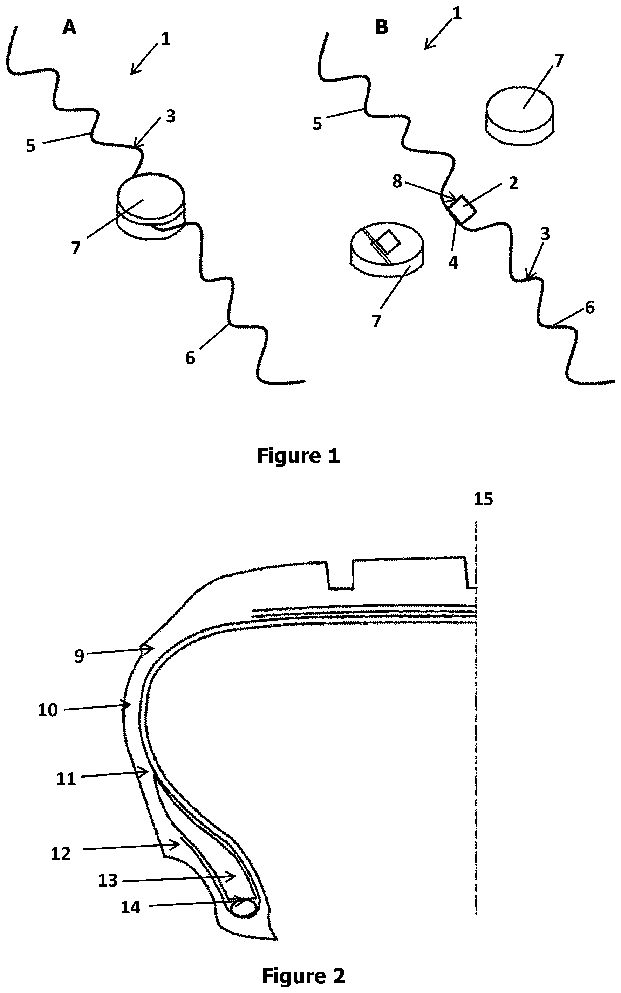

Figures 1A and 1B illustrate an electrical device (1) according to the present invention. Said electrical device (1) can be an identification or tracking device, such as one that may be used in manufacturing, distribution, and sales activities, or a monitoring device for measuring temperature, pressure, or other physical parameters in an operating tire. In a preferred embodiment of the invention, said electrical device (1) is an RFID transponder comprising an RFID chip and an antenna in operable communication for wirelessly communicating with external equipment, such an RFID reader.

Said electrical device (1) comprises a plastic package (8) comprising a chip (not depicted) and an antenna (not depicted) which is connected to the chip for contactless communication. Said plastic package (8) accommodates these transponder components as integrated components and is able to accommodate larger microchips and longer coils for increased functional ranges. The material for said plastic package (8) may be selected based on the application. The plastic material should also include composites made up of curable resins.

Said plastic package (8) forms a bobbin (2) on its outer surface. A coupling antenna (3) having at least one coil winding (4) is arranged on the bobbin (2), wherein the coil winding (4) completely surrounds the integrated antenna of the chip in order to form a backscatter propagation coupling. The two ends (5 and 6) of the coil winding (4) form antenna wires of a dipole antenna for the UHF range.

The plastic package (8) and the at least one coil winding (4) are preferably integrated into a main housing (7). In a preferred embodiment of the invention, said main housing (7) is in the form of two cylinder-shaped halves which can be assembled.

The antenna (not depicted) which is connected to the chip and integrated into the plastic package (8) and the at least one coil winding (4) of the coupling antenna (3) preferably form conductor loops which are aligned with respect to one other. In a preferred embodiment of the invention, the bobbin (2) is arranged concentrically with respect to the antenna which is connected to the chip, and which is preferably configured as a winding coil. The chip is then also preferably arranged in the center of this winding coil.

Said plastic package (1) and the at least one coil winding (4) are fixed with respect to one another within said main housing (7), for example, using adhesive, welding, or other methods known in the art.

Preferably, the chip antenna is a flat coil having a winding plane that can be taken for aligning the coupling antenna (3) in order to form an optimal coupling between the chip antenna and the coupling antenna (3). A coil-shaped spring antenna, helical antenna, plate-shaped antenna, and various types of rodshaped antennas can be used as the coupling antenna (3). In a preferred embodiment of the invention, said coupling antenna (3) is a helical antenna. In a more preferred embodiment of the invention, the helix angle between the coupling antenna (3) and the axial line is between 5° and 60°.

The coupling antenna (3) comprises a core material of wire, such as coated or uncoated and metal alloys. The coupling antenna (3) further comprises at least one reinforcement material co-twisted with or wrapped around said core material so that said coupling antenna (3) can endure the bending and flexing deformations typically experienced by the tire. In an alternative embodiment, coupling antenna (3) comprises a core material and two reinforcement materials.

Said at least one reinforcement material is a high strength polymeric reinforcement yarn. Said high strength polymeric reinforcement yarn is a polymeric material having a melting or thermal degradation point higher than 200°C. In a preferred embodiment of the invention, said reinforcement material is chosen from a group containing polyamide 6, polyamide 4,6, polyamide 5,6, polyamide 6,6, polyester (HMLS), UHMWPE (ultra-high molecular weight polyethylene) and combinations thereof. In a preferred embodiment of the invention, the tenacity of the high strength reinforcement yarn is at least 15g/dtex and preferably higher than 20g/dtex.

Said reinforcement material comprises a tacky component. Preferably, said reinforcement material is treated with a tackifying solution in order to improve the adhesion of the coupling antenna (3) to the rubber component of the tire. In a preferred embodiment of the invention, said reinforcement material is treated by dipping into a resorcinol formaldehyde latex (RFL) solution, as commonly used in the art. In alternative embodiments, resorcinol formaldehyde-free (RF-free) compositions, such as compositions containing acrylic resins or natural latex, can be used. In alternative embodiments, a rosin ester and/or rosin ester tackifier may be added to the dipping solution. However, the skilled person can appreciate that any method known in the art for improving the adhesion of components to rubber may be used in this application such that the coupling antenna (3) remains intact and adhered to or within the tire through the lifetime of the tire.

The electrical device (1) can be mounted directly onto uncured rubber of a tire before the curing process so that it is embedded among the layers comprising the final tire product. The tire types which can be equipped with the electrical device (1) include but are not limited to, bias tires, belted bias tires, radial tires, solid tires, semi-pneumatic tires, pneumatic tires, and airless tires. Generally, all tires include an outer tread, a bead which contacts a rim upon installation of the tire, and sidewalls that extend between the tread and bead. The method is advantageous in that it allows exact positioning of the electrical device (1) on the desired location and in a desired alignment on the tire without overhandling the electrical device (1) and causing damage.

It is most advantageous to place the electrical device (1) in positions on the tire that have minimum tensile and compressive strains during driving conditions. Figure 2 illustrates alternative placements for an electrical device on a tire, wherein the circumferential direction of the tire is denoted by 15. Preferably, the electrical device (1) is mounted between the carcass layer and the outer rubber layer at upper (9), middle (10), or lower (11) sidewall area in the circumferential direction of tire. Good readability of the tag is obtained in these positions due to the thin gauge and the distance from the metallic components of the tire. In another embodiment of the invention, the electrical device (1) is mounted onto the bead area of the tire, including apex (12, 13) rubber and bead ring (14). The electrical device (1) may be mounted on the apex rubber or in the apex rubber in cases where the apex rubber is composed of two or more parts. These positions are advantageous due to reduced deformation in horizontal direction in driving conditions. In another embodiment of the invention, the electrical device (1) is mounted between the apex rubber and bead ring apex, wherein the electrical device (1) is mounted first on the upper side of the rubberized bead ring and the apex rubber is mounted onto the bead ring and the tag (1) This position is advantageous due to reduced deformation in all directions in driving conditions.

After electrical device (1) is mounted onto the uncured rubber, other elements of the tire, such as tire cords, are be added onto the uncured rubber, and tire is cured in order to get the final tire product having an electrical device (1), such as an RFID transponder. Thereafter, the tire can be identified by the use of an RFID reader, which allows for tracking the tire in a manufacturing or production system, monitoring the location of the tire, and performing inventory operations. A single tire may include one or several electrical devices (1) described herein. For example, if it is desired to monitor physical parameters at different locations in the tire or to monitor different parameters. The location for the device partially depends on its function.

The skilled person can appreciate that the electrical device (1) of the present invention can be used with other rubber or rubber-based articles in addition to tires. Other rubber-based articles include, but are not limited to, suspension components, cushions, shoe soles, hoses, hockey pucks, conveyor belts, musical mouth pieces and bowling balls.

In a nutshell, the present invention proposes an electronic device (1) comprising a chip and an antenna, a plastic package (8) wherein said chip and an antenna are integrated and wherein said plastic package forms a bobbin (2) on its outer surface, on which an coupling antenna (3) having at least one coil winding is arranged, and wherein said coupling antenna (3) comprises a core material and at least one reinforcement material co-twisted with or wrapped around said core material.

In accordance with the present invention, said at least one reinforcement material is a high strength polymeric reinforcement yarn.

In accordance with the present invention, said high strength polymeric reinforcement yarn is made from a polymeric material having a melting or thermal degradation point higher than 200°C.

In a further variation of the present invention, said reinforcement material is chosen from a group containing nylon 6, nylon 4,6, nylon 5,6, nylon 6,6, polyester (ultra-high molecular weight polyester, high molecular weight polyester) and combinations thereof.

In a further variation of the present invention, wherein the tenacity of said high strength reinforcement yarn is higher than 15g/dtex.

In a further variation of the present invention, wherein said reinforcement material comprises a tacky material.

In a further variation of the present invention, said reinforcement material is treated with a tackifying solution.

In a further variation of the present invention, said tackifying solution contains at least one material selected from the group comprised of resorcinol formaldehyde latex solution, acrylic resin solution, rosin ester solution, natural latex solution, and combinations thereof.

The present invention further proposes a tire having an electronic device (1) as described in any one of Claims 1 to 9.

In a variation of the present invention, said electronic device (1) is mounted into a sidewall of the tire.

In a further variation of the present invention, said electronic device (1) is mounted into a bead area of the tire.

## Claims

1. An electronic device (1) comprising a chip and an antenna, a plastic package (8) wherein said chip and an antenna are integrated and wherein said plastic package forms a bobbin (2) on its outer surface, on which a coupling antenna (3) having at least one coil winding is arranged, **characterized in that** said coupling antenna (3) comprises a core material and at least one reinforcement material co-twisted with or wrapped around said core material, said at least one reinforcement material is a high strength polymeric reinforcement yarn made from a polymeric material having a melting or thermal degradation point higher than 200°C.

2. An electronic device (1) as described in Claim 1, wherein said reinforcement material is chosen from a group containing nylon 6, nylon 4,6, nylon 5,6, nylon 6,6, polyester **,** ultra-high molecular weight polyester, high molecular weight polyester and combinations thereof.

3. An electronic device (1) as described in Claim 1 or 2, wherein the tenacity of said high strength reinforcement yarn is higher than 15g/dtex.

4. An electronic device (1) as described in any preceding Claim, wherein said reinforcement material comprises a tacky material.

5. An electronic device (1) as described in Claim 4, wherein said reinforcement material is treated with a tackifying solution.

6. An electronic device (1) as described in Claim 4, wherein said tackifying solution contains at least one material selected from the group comprised of resorcinol formaldehyde latex solution, acrylic resin solution, rosin ester solution, natural latex solution, and combinations thereof.

7. A tire having an electronic device (1) as described in any one of Claims 1 to 6.

8. A tire as described in Claim 7, wherein said electronic device (1) is mounted into a sidewall of the tire.

9. A tire as described in Claim 7, wherein said electronic device (1) is mounted into a bead area of the tire.

## Patentansprüche

1. Eine elektronische Vorrichtung (1) umfassend einen Chip und eine Antenne, ein Kunststoffgehäuse (8), wobei der genannte Chip und eine Antenne integriert sind und wobei das Kunststoffgehäuse an seiner Außenfläche einen Spulenkörper (2) bildet, auf dem eine Kopplungsantenne (3) mit mindestens einer Spulenwicklung angeordnet ist, **dadurch gekennzeichnet, dass** die genannte Kopplungsantenne (3) ein Kernmaterial und mindestens ein Verstärkungsmaterial umfasst, das mit dem Kernmaterial zusammengedreht oder um dieses herumgewickelt ist, wobei das mindestens eine Verstärkungsmaterial ein hochfestes polymeres Verstärkungsgarn ist, das aus einem polymeren Material mit einem Schmelz- oder thermischen Zersetzungspunkt von mehr als 200°C hergestellt ist.

2. Eine elektronische Vorrichtung (1) wie in Anspruch 1 beschrieben, wobei das genannte Verstärkungsmaterial aus einer Gruppe ausgewählt ist, die Nylon 6, Nylon 4,6, Nylon 5,6, Nylon 6,6, Polyester, Polyester mit ultrahohem Molekulargewicht, Polyester mit hohem Molekulargewicht und Kombinationen davon enthält.

3. Eine elektronische Vorrichtung (1) wie in Anspruch 1 oder 2 beschrieben, wobei die Festigkeit des genannten hochfesten Verstärkungsgarns höher als 15 g/dtex ist.

4. Eine elektronische Vorrichtung (1) wie in einem der vorhergehenden Ansprüche beschrieben, wobei das genannte Verstärkungsmaterial ein klebriges Material umfasst.

5. Eine elektronische Vorrichtung (1) wie in Anspruch 4 beschrieben, wobei das genannte Verstärkungsmaterial mit einer klebrigmachenden Lösung behandelt ist.

6. Eine elektronische Vorrichtung (1) wie in Anspruch 4 beschrieben, wobei die genannte klebrigmachende Lösung mindestens ein Material enthält, das aus der Gruppe ausgewählt ist, die aus Resorcin-Formaldehyd-Latexlösung, Acrylharzlösung, Kolophoniumesterlösung, Naturlatexlösung und Kombinationen davon besteht.

7. Ein Reifen mit einer elektronischen Vorrichtung (1) wie in einem der Ansprüche 1 bis 6 beschrieben.

8. Ein Reifen wie in Anspruch 7 beschrieben, wobei die genannte elektronische Vorrichtung (1) in eine Seitenwand des Reifens eingebaut ist.

9. Ein Reifen wie in Anspruch 7 beschrieben, wobei die genannte elektronische Vorrichtung (1) in einem Wulstbereich des Reifens angebracht ist.

## Revendications

1. Un dispositif électronique (1) comprenant une puce et une antenne, ainsi qu'un boîtier en plastique (8) dans lequel ladite puce et ladite antenne sont intégrées et dans lequel ledit boîtier en plastique formant, sur sa surface extérieure, une bobine (2) sur laquelle est disposée une antenne de couplage (3) comportant au moins un enroulement en bobine, **caractérisé en ce que** ladite antenne de couplage (3) comprend un matériau central et au moins un matériau de renfort, lequel est torsadé avec ou enroulé autour dudit matériau central, ledit matériau de renfort étant un fil polymère de renfort haute résistance constitué d'un matériau polymère présentant un point de fusion ou un point de dégradation thermique supérieur à 200 °C.

2. Un dispositif électronique (1) selon la revendication 1, dans lequel ledit matériau de renfort est sélectionné parmi le groupe constitué de nylon 6, nylon 4,6, nylon 5,6, nylon 6,6, polyester, polyester de poids moléculaire ultra-élevé, polyester de poids moléculaire élevé, ainsi que leurs combinaisons.

3. Un dispositif électronique (1) selon la revendication 1 ou 2, dans lequel la ténacité dudit fil de renfort à haute résistance est supérieure à 15 g/dtex.

4. Un dispositif électronique (1) selon l'une quelconque des revendications précédentes, dans lequel ledit matériau de renfort comprend un matériau collant.

5. Un dispositif électronique (1) selon la revendication 4, dans lequel ledit matériau de renfort est traité avec une solution collante.

6. Un dispositif électronique (1) selon la revendication 4, dans lequel ladite solution collante contient au moins un matériau sélectionné parmi le groupe constitué de la solution de latex résorcinol-formaldéhyde, la solution de résine acrylique, la solution d'ester de colophane, la solution de latex naturel, ainsi que leurs combinaisons.

7. Un pneumatique comportant un dispositif électronique (1) selon l'une quelconque des revendications 1 à 6.

8. Un pneumatique selon la revendication 7, dans lequel ledit dispositif électronique (1) est monté dans un flanc du pneumatique.

9. Un pneumatique selon la revendication 7, dans lequel ledit dispositif électronique (1) est monté dans une zone de talon du pneumatique.
